(19) Europäisches Patentamt
European Patent Office
Office européen des brevets

(11) EP 0 582 811 B1

(12) **EUROPÄISCHE PATENTSCHRIFT**

(45) Veröffentlichungstag und Bekanntmachung des Hinweises auf die Patenterteilung:
**13.08.1997 Patentblatt 1997/33**

(51) Int Cl.[6]: **C08G 77/28**, C08G 77/58, C08G 77/22

(21) Anmeldenummer: **93109931.1**

(22) Anmeldetag: **22.06.1993**

(54) **Geformte Sulfonatgruppen-haltige Organopolysiloxane, Verfahren zu ihrer Herstellung und Verwendung**

Formed sulfonate groups containing polysiloxanes, process for their preparation and their application

Polysiloxanes façonnés ayant des groupes sulphonate, procédé de préparation et leur application

(84) Benannte Vertragsstaaten:
**AT BE CH DE DK ES FR GB IE IT LI LU NL PT SE**

(30) Priorität: **17.07.1992 DE 4223539**

(43) Veröffentlichungstag der Anmeldung:
**16.02.1994 Patentblatt 1994/07**

(73) Patentinhaber: **Degussa Aktiengesellschaft**
**60311 Frankfurt (DE)**

(72) Erfinder:
- **Panster, Peter, Dr.**
**D-6458 Rodenbach (DE)**
- **Kleinschmit, Peter, Prof. Dr.**
**D-6450 Hanau 9 (DE)**

(56) Entgegenhaltungen:
**EP-A- 0 098 946** **WO-A-92/10528**
**FR-A- 2 413 416**

Bemerkungen:
Die Akte enthält technische Angaben, die nach dem Eingang der Anmeldung eingereicht wurden und die nicht in dieser Patentschrift enthalten sind.

EP 0 582 811 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der Erfindung sind geformte Sulfonatgruppen-haltige Organopolysiloxane, die gegenüber bereits entwickelten Sulfonatgruppen-haltigen Organopolysiloxanen (DE 32 26 093) die verfahrens- sowie anwendungstechnischen Vorteile einer makroskopischen Kugelform haben. Gleichzeitig werden Verfahren beschrieben, nach denen diese neuen Produkte nicht nur in der für die jeweilige Anwendung idealen Kugelgröße, sondern auch mit geeigneten physikalischen Eigenschaften hergestellt werden können. Weiterhin werden Verfahren zur Verwendung dieser geformten Organopolysiloxane beschrieben.

Stark saure Kationenaustauscher, deren funktionelle Gruppen aus Sulfonsäureeinheiten bestehen, finden z. B. außer bei der Entsalzung, Reinigung, Enthärtung von Wasser sowie wäßrigen Lösungen und bei der Trinkwasseraufbereitung vor allem auch als fester Säurekatalysator bei chemischen Synthesen oder als Träger von Metallkatalysatoren (s. Haag et al. DE-OS 18 00 371) Verwendung (s. W. Neier, Chem. Ind. 33, (1981), S. 632).

Die im katalytischen Bereich fast ausschließlich verwendeten Typen bestehen im Prinzip stets aus einem organischen, teilweise vernetzten Polystyrol-Grundgerüst, an das Sulfonatgruppen über die Phenylringe gebunden sind.

Diesem Aufbau entsprechend sind die physikalischen und chemischen Eigenschaften dieser Kationenaustauscher geprägt von der organischen Natur des Polymergerüstes, wodurch eine Reihe anwendungstechnischer Nachteile bedingt ist, wie eine relativ niedrige Temperaturbeständigkeit von 100 bis 130° C, eine teilweise große Empfindlichkeit gegenüber chemischen Angriffen und Bakterienbefall, die mit einem vollständigen Abbau der Matrix enden können, Löslichkeit in bestimmten Lösungsmitteln unter drastischen Bedingungen, starke Quellbarkeit und Abhängigkeit des Austauschervolumens vom umgebenden Medium, Notwendigkeit der Quellung, um die funktionellen Gruppen zugänglich zu machen und deshalb Nichteinsetzbarkeit in bestimmten organischen Lösungsmitteln.

Anorganische Polymersysteme, wie z. B. Kieselgel, besitzen zwar die Vorzüge einer festliegenden starren Struktur, Nichtquellbarkeit, hohe Temperatur- und Alterungsbeständigkeit, Unlöslichkeit in organischen Medien und Wasser (s. EP 0 008 902, GB 1 506 226), aufgrund der relativ geringen Anzahl funtkioneller Gruppen, besitzen auf dieser Basis hergestellte Kationenaustauscher in der $H^+$-Form allerdings nur eine maximale Kapazität von 0,5 - 0,6 meq/g. Da die Verankerung der $SO_3H$-tragenden Gruppen auf der Trägeroberfläche aus sterischen Gründen nur über max. 1 - 1,5 Siloxanbindungen erfolgt, ist darüber hinaus stets die Gefahr ihrer Loslösung gegeben. Der Stand der Technik auf dem Ionenaustauschersektor allgemein ist in Übersichtsform z. B. in Ullmanns Enzyklopädie der techn. Chemie, 4. Auflg., Bd. 13, S. 29 beschrieben. Informationen speziell zur Säurekatalyse mit sauren Ionenaustauschern werden durch H. Widdecke in British Polymer Journal, Bd. 16, 1984, S. 188 - 192 gegeben.

In der deutschen Patentschrift DE 32 26 093 werden Sulfonatgruppen-haltige Organopolysiloxane beschrieben, die auch als feste Säurekatalysatoren eingesetzt werden können, welche ein gegen An- oder Auflösung in wäßrigen Medien beständiges Organopolysiloxangerüst aufweisen und bei denen die Sulfonatgruppen über organische Spacergruppen an der Matrix verankert sind. Diese Systeme weisen die Vorzüge eines anorganischen Polymergerüstes auf und besitzen eine relativ hohe Kapazität an Sulfonatgruppen, deren Verankerung über ein trivalent in die Matrix eingenetztes Si-Atom garantiert wird. Darüber hinaus kann die Matrix dieser Polymeren durch den Einbau von nichtfunktionellen Silicium-, Titan- und Aluminiumeinheiten modifiziert und den Anforderungen angepaßt werden. Als ungünstig erwies sich allerdings bisher die Tatsache, daß die makroskopische Erscheinungsform dieser Produkte unbefriedigend ist, denn diese Polymeren liegen als unsymmetrische grobe oder feine Partikel und nicht in der anwendungstechnisch günstigen Kugelform vor. Ihre physikalischen und morphologischen Eigenschaften sind zudem noch nicht optimal.

Aufgabe der vorliegenden Erfindung ist daher, Sulfonatgruppen-haltige Organopolysiloxane der prinzipiell in der deutschen Patentschrift DE 32 26 093 beschriebenen Art in Kugelform und mit gewünschten physikalischen Eigenschaften reproduzierbar bereitzustellen. Diese Aufgabe wird erfindungsgemäß gelöst durch die Entwicklung von geformten Sulfonatgruppen-haltigen Organopolysiloxanen, wie sie in den Ansprüchen 1 bis 9 beschrieben sind.

Das Verhältnis der Komponenten nach Formel (I) und Formel (IV) kann innerhalb des angegebenen Bereichs von 1 : 4 bis 1 : 20 sehr stark variieren, ohne daß Probleme mit den morphologischen, physikalischen oder chemischen Eigenschaften der erfindungsgemäßen Produkte oder bei den entsprechenden Herstellungsverfahren auftreten. Von den vernetzenden Brückengliedern nach Formel (IV) können die fünf gezeigten Typen prinzipiell alle vertreten sein.

Die in der Praxis zu wählenden Verhältnisse hängen in erster Linie von den vorgesehenen speziellen Einsatzgebieten sowie -bedingungen und den hierfür erforderlichen chemischen und physikalischen Eigenschaften ab.

Die Art und Anzahl der verwendeten Vernetzergruppierung bewirken einen spezifischen stofflichen und/oder anwendungstechnischen Effekt. Durch einen höheren Anteil der Vernetzergruppe $SiO_{4/2}$ kann z. B. die Strukturfestigkeit des Sulfonatgruppen-haltigen Organopolysiloxans bei Einsatz in aggressiven organischen oder wäßrigen Medien erhöht werden. Die Gruppe $R'SiO_{3/2}$ oder $R'_2SiO_{2/2}$ bewirken einen hydrophobierenden und im letztgenannten Fall auch elastifizierenden Effekt. Der Einbau von Aluminium-haltigen Oxanbausteinen bedeutet weitere acide Zentren in der Matrix.

Nachdem die erfindungsgemäßen geformten Sulfonatgruppen-haltigen Organopolysiloxane vor allem als Festsäurenkatalysatoren eingesetzt werden, stellen die in $H^+$-Form gemäß Ansprüchen 2 und 3 vorliegenden Polymeren die wichtigsten Systeme dar. Dies gilt auch unter dem Aspekt der Herstellung, bei der die Säureform besonders einfach zugänglich ist und primär zunächst erhalten wird.

Alle anderen Formen, bei denen M in Formel (I) nicht für H steht, werden ausgehend von dieser $H^+$-Form im Rahmen eines Ionenaustausches oder einer Neutralisation gebildet, wobei M auch ein komplexes, katalytisch aktives Metall sein kann.

Besondere Vorteile bezüglich der Verfügbarkeit der Ausgangsmaterialien und der stofflichen Eigenschaften werden mit Sulfonatgruppen-haltigen Organopolysiloxanen erreicht, bei denen gemäß den Ansprüchen 3 bis 8 $R^1$ für eine Propylengruppe steht. Die bei der Herstellung der erfindungsgemäßen geformten Produkte eingesetzten Monomeren sind hinsichtlich der vernetzenden Brückenglieder gängige, bekannte Verbindungen. Die Monomerform der Sulfonatgruppen-tragenden Einheit ist in der deutschen Patentanmeldung P 41 42 129.9 beschrieben.

Die in den Ansprüchen 4 bis 8 genannten Zusammensetzungen haben sich unter den verschiedenen Aspekten des katalytischen Einsatzes als besonders leistungsfähige Kombinationen erwiesen.

Analoges gilt auch für die gemäß Anspruch 9 beanspruchte Form des statistischen Copolykondensates, bei dem eine statistische Verteilung der Komponenten nach Formeln (I) und (IV) entsprechend der molaren Verhältnisse der Ausgangsprodukte gegeben ist. Prinzipiell sind natürlich auch Block- und gemischte Copolykondensate herstellbar.

Gegenstand der Erfindung sind auch Verfahren zur Herstellung der erfindungsgemäßen geformten Sulfonatgruppen-haltigen Organopolysiloxane. Das erfindungsgemäße Hauptverfahren ist in Anspruch 10 beschrieben.

Je nach Konzentration der sulfonierten Organosiliciumverbindung der Formel (XII) in der wäßrigen Lösung können auch kondensierte Derivate, z. B. mit der Zusammensetzung

$$HO_3S\text{-}R^1\text{-}(HO)_2Si\text{-}O\text{-}Si(OH)_2\text{-}R^1\text{-}SO_3H$$

vorliegen. Entsprechendes gilt auch für die verwendeten Vernetzerkomponenten nach Formel (XIII), die prinzipiell in Form oligomerer Verbindungen, die z. B. im Fall der Kieselsäureester die Zusammensetzung

$$(RO)_3Si\text{-}O\text{-}Si(OR)_3$$

haben, vorliegen können. Ein entsprechendes kommerziell verfügbares Produkt ist z. B. der sog. "Ester 40", der einen theoretischen $SiO_2$-Gehalt von 40 Gew.-% aufweist.

Der Zusatz eines wassermischbaren Lösungsmittels, wie z. B. die in Anspruch 12 genannten Alkohole, zu der zu gelierenden Mischung, bestehend aus der wäßrigen Lösung der sulfonierten Organosiliciumverbindung der Formel (XII) und Vernetzerkomponente nach Formel (XIII), kann sich vor allem dann als notwendig und sinnvoll erweisen, wenn wegen zu großer organischer Substituenten R' eine Entmischung auftritt oder wenn besonders feinteiliges geformtes Produkt gewünscht wird. Alternativ dazu kann es sich im Einzelfall auch als sinnvoll erweisen, zunächst ohne Lösungsmittelzusatz aus relativ konzentrierter Lösung heraus zu gelieren und erst während der Gelierung oder bis zu einer Stunde danach mit einem wassermischbaren Lösungsmittel oder mit Wasser zu verdünnen, um die Viskosität des Gels und damit auch die Größe der Tropfen im späteren 2-Phasensystem zu beeinflussen. Die Größe der Tropfen und damit auch für die spätere Kugelgröße hängt natürlich auch stark von der Intensität der Rührung ab.

Nachdem die Säurekomponente nach Formel (XII) als Kondensationsbeschleuniger wirkt, hängt die Kondensationsgeschwindigkeit (Geliergeschwindigkeit) und die Dauer bis zum Einsetzen der Gelierung natürlich grundsätzlich stark von der Konzentration der sulfonierten Organosiliciumverbindung in der eingesetzten wäßrigen Lösung ab.

Die in der Hydrolyse- bzw. Gelierphase anzuwendende Temperatur wird im Einzelfall empirisch festgelegt. Es wird dabei darauf geachtet, daß für den darauffolgenden nächsten Verfahrensschritt, die sog. Formungsphase, eine Feststoff-freie, flüssigkeitsdurchsetzte geleeartige Masse erhalten bleibt.

Die mit der Überführung der kohärenten flüssigkeitsdurchsetzten gelartigen Masse, in der die Kondensationsreaktion weiter fortschreitet, in separate sphärische Teilchen einhergehende Formungsphase beginnt mit dem Versetzen der gelierenden Reaktionsmischung, die vorher gegebenenfalls noch mit Wasser oder einem wassermischbaren Lösungsmittel verdünnt wurde, mit einem weitgehend wasserunlöslichen Lösungsmittel. Dieser Zusatz ist mit der Ausbildung eines 2-Phasensystems verbunden, wobei die wäßrige Phase, welche die Siloxankomponente enthält, in dem weitgehend wasserunlöslichen organischen Lösungsmittel dispergiert und mit fortschreitender Dauer und gegebenenfalls Temperaturerhöhung zu einem kugelförmigen Feststoff ausgehärtet wird. Die Menge Lösungsmittel, die zur Dispergierung verwendet wird, ist so zu bemessen, daß keine Verklumpungen und Anbackungen auftreten.

Die Abtrennung des kugelig geformten feuchten Produktes von dem flüssigen Dispersionsmittel kann durch übliche Maßnahmen, wie Dekantieren, Abfiltrieren oder Zentrifugieren erfolgen.

Zur Extraktion des gebildeten kugelförmigen Feststoffs wird gegebenenfalls bevorzugt ein niedrigsiedender Alkohol verwendet. Durch diese Maßnahme kann die Trocknung des Feststoffs, sofern sich diese direkt an die Herstellung anschließt, erleichtert werden. Die sog. Temperung bei Temperaturen von 150 bis 230° C dient einer Härtung und Stabilisierung des geformten Feststoffs.

Das getrocknete bzw. getemperte Produkt kann in üblichen Vorrichtungen in verschiedene Korngrößenfraktionen klassifiziert werden. Von den Aufarbeitungsmaßnahmen Extraktion, Trocknung, Temperung und Klassifizierung kann, je nach den Umständen, die eine oder andere entfallen. Eine Klassifikation kann an flüssigkeitsfeuchtem, getrocknetem oder getemperten Produkt durchgeführt werden.

Als organische Phase, in der die wäßrige Siloxanenthaltende Phase dispergiert wird, kann im Prinzip jedes mit Wasser weitgehend nichtmischbare Lösungsmittel verwendet werden. Die gemäß Anspruch 5 verwendeten Lösungsmittel sind unter dem Aspekt der technischen Handhabbarkeit und Verfügbarkeit bevorzugt.

Eine besonders wichtige Ausführungsform der erfindungsgemäßen Verfahren sieht vor, das noch wasserfeuchte bzw. teilweise mit Anteilen Lösungsmittel behaftete kugelförmige Material einer Temperaturbehandlung während 1 Stunde bis zu einer Woche bei Temperaturen von 50 bis 300° C, vorzugsweise 100 bis 200 C, zu unterziehen, wobei bedarfsweise Überdruck angewendet wird. Gemäß Anspruch 17 kann dabei eine anorganische oder organische Säure zugesetzt werden, welche zusätzlich zu den vorhandenen Sulfonsäuregruppen als Kondensationskatalysator wirkt.

Diese Behandlung unter "dämpfenden" bzw. digerierenden Bedingungen dient überwiegend einer Verbesserung der mechanischen Festigkeit und der Porosität des geformten Materials.

Nach den gemäß Ansprüchen 10 bis 17 beanspruchten Verfahrensweisen werden geformte Sulfonatgruppen-haltige Organopolysiloxane erhalten, bei denen $M^{x+}$ gleich $H^+$ bedeutet. Die Überführung in eine entsprechende Verbindung, bei der $M^{x+}$ für ein 1- bis 4-wertiges, gegebenenfalls komplexes Metallion steht, geschieht durch einen Ionenaustausch. Dieser Ionenaustausch kann auch in Gestalt einer Neutralisation erfolgen, wie dies auch nach dem Stand der Technik bei bekannten organischen Ionenaustauschern üblich ist.

Man kann den Austausch der Kationen der Sulfonatgruppentragenden geformten Organopolysiloxane in einer bewegten Suspension mit dem zumindest teilweise gelösten, dissoziationsfähigen Reagenz durchführen. Dieser Vorgang kann mehrmals wiederholt werden, bis der Ionenaustausch quantitativ vollzogen ist. Anschließend wird gewaschen und der nun in der $M^{x+}$-Form vorliegende Ionenaustauscher gegebenenfalls getrocknet oder direkt der weiteren Verwendung zugeführt. Als flüssige Phase kann dabei Wasser oder aber auch ein organisches Lösungsmittel verwendet werden.

Arbeitet man nach dem dynamischen Prinzip, so setzt man die Sulfonatgruppen-haltige Ausgangsverbindung als Austauscherbett ein und bringt sie mit der Lösung des zumindest teilweise gelösten Reaktionspartners in Kontakt. Auch hier können wie bei den nach der statischen Methode erhaltenen Produkten Nachbehandlungen im erwähnten Umfang vorgesehen werden.

Verwendet man als Austauscherbett eine Austauschersäule, so muß, um einen ausreichenden Durchfluß zu gewährleisten, das polymere Ausgangsprodukt eine bestimmte Mindestkorngröße besitzen, die auch in Abhängigkeit von der Säulendimension festzulegen ist. Im allgemeinen wird man bei Laborsäulen mit einer Mindestkorngröße von 0,2 mm auskommen. Nach vollzogenem Austausch wird auch hier salzfrei gewaschen und die weitere Aufarbeitung kann nach üblichem Schema durchgeführt werden.

Bei den Reagenzien, mit denen der Ionenaustausch durchgeführt wird, handelt es sich um anorganische oder organische Metallsalze, von Hauptgruppen- oder Nebengruppenmetallen. Soll die Einführung eines Metalls $M^{x+}$ über eine Neutralisation erfolgen, so wird ein Metallhydroxid, -oxid oder auch alkoholat verwendet. Bei der Einführung komplexer Metallionen, wie z. B. $Cu(NH_3)_4^{2+}$ $Pd(NH_3)_4^{2+}$, $Pt(NH_3)_4^{2+}$, geht man ebenfalls von Salzen dieser Verbindungen mit anorganischen oder organischen Anionen aus.

Neben der Verwendung als Ionenaustauscher und wenn $M^{x+}$ für ein katalytisch aktives, gegebenenfalls komplexes Metallion steht, z. B. als Katalysatorträger, ist eine besonders wichtige Verwendung der Einsatz als fester Säurekatalysator bei chemischen Umsetzungen. Hauptanwendungsbereich ist dabei die organische Synthese, z. B. Veretherungsreaktionen, Etherspaltungsreaktionen, Veresterungsreaktionen, Umesterungsreaktionen, Isomerisierungsreaktionen. Auch bei diesem katalytischen Einsatz kann das sulfonsaure Polysiloxan sowohl in einer gerührten Suspension wie auch im Festbett eingesetzt werden.

Charakterisiert sind die neuen geformten Sulfonatgruppen-haltigen Polysiloxane insbesondere anhand der quantitativen Hydrolyseausbeuten, der Elementaranalysen und durch die Bestimmung der Säurekapazität. Je nach Vorbehandlung besitzen die kugelig geformten Sulfonatgruppen-haltigen Polysiloxane einen Teilchendurchmesser von 0,01 bis 3,0 mm, vorzugsweise 0,05 bis 2,0 mm, eine spezifische Oberfläche von 0,01 bis 1200, vorzugsweise 10 bis 800 $m^2/g$, ein spezifisches Porenvolumen von 0,01 bis 6,0 ml/g und eine Schüttdichte von 50 bis 1000 g/l, vorzugsweise 100 bis 800 g/l.

Die chemische und thermische Stabilität der geformten Sulfonatgruppen-haltigen Polysiloxane ist grundsätzlich sehr gut und mit der von entsprechenden monomeren Verbindungen vergleichbar. Je nach umgebendem Medium kann z. B. eine Temperaturbeständigkeit bis über 200° C gegeben sein.

Die Erfindung wird nachfolgend anhand von Ausführungsbeispielen weiter erläutert.

Beispiel 1

250 ml (225 mmol) einer 0,9 molaren, wäßrigen Lösung der sulfonierten Organosiliciumverbindung mit der Formel $(HO)_3Si(CH_2)_3$-$SO_3H$ wurden in einem 3 l Glasgefäß mit Doppelmantel, KPG-Rührer, Rückflußkühler und Tropftrichter vorgelegt. Bei einer Temperatur von 40° C wurden unter kräftigem Rühren innerhalb von 5 min. 421,9 g (2,025 Mol) $Si(OC_2H_5)_4$ zugetropft. Dabei stieg die Temperatur im Reaktor bis auf 60° C an. Nach dem Zutropfen wurde der Reaktorinhalt auf 35° C abgekühlt und ca. 45 min. weiter gerührt, bis eine merkliche Verdickung der klaren Lösung einsetzte.

Dem sich bildenden Gel wurden 1.300 ml technisches Xylol auf einmal zugesetzt. Das 2-Phasensystem, die Siloxanenthaltende wäßrige/alkoholische Phase und die organische Xylolphase, wurde eine weitere Stunde bei ca. 40° C gerührt, wobei schon nach kurzer Zeit die Ausbildung von kleinen Kügelchen aus der wäßrigen/alkoholischen Phase zu beobachten war. Die Suspension wurde dann auf Rückflußtemperatur aufgeheizt und 1,5 h bei dieser Temperatur gerührt und dann abgekühlt. Nach dem Absaugen der überstehenden organischen Phase wurde der in Form kleiner Kügelchen vorliegende Feststoff mit 500 ml 1 n HCl-Lösung versetzt und 48 h bei 150° C in einem emaillierten Autoklaven unter Eigendruck gerührt. Danach wurde abgekühlt, die HCl-haltige Phase abgesaugt und der verbleibende Feststoff HCl-frei gewaschen. Nach 24-stündiger Trocknung bei 120° C wurden 165 g eines in Form kleiner Kugeln vorliegenden Sulfonatgruppen-haltigen Polysiloxans, bestehend aus Einheiten der Formel

$$SO_3H\text{-}(CH_2)_3\text{-}SiO_{3/2} \cdot 9\ SiO_{4/2}$$

erhalten.

| | | |
|---|---|---|
| Korngrößenverteilung | 20 % | 1,0 - 1,4 mm |
| | 80 % | 0,1 - 1,0 mm |
| Schüttdichte | 320 g/l | |
| Porenvolumen | 2,5 ml/g (ausschließlich Meso- und Makroporen, d.h. Porendurchmesser größer als 2 nm) | |
| Spezifische Oberfläche | 530 $m^2/g$ | |
| $H^+$-Kapazität | 0,96 mVal $H^+/g$ | |

| Elementaranalyse | % C | % H | % Si | % S |
|---|---|---|---|---|
| Theorie | 5,0 | 1,0 | 39,2 | 4,5 |
| Gefunden | 4,6 | 0,8 | 38,7 | 4,2 |

Beispiel 2

175,77 ml (175,8 mmol) einer 1,0 molaren, wäßrigen Lösung einer sulfonierten Organosiliciumverbindung mit der Formel $(HO)_3Si(CH_2)_3$-$SO_3H$ wurden in einem zylindrischen 1 l Glasgefäß (HWS-Gefäß) mit Doppelmantel, KPG-Rührer, Rückflußkühler und Tropftrichter auf 60° C aufgeheizt. Binnen 1 min. wurde dann die Sulfonatlösung mit 185 g sog. "Ester 40", bei dem es sich um ein Teilkondensat von $Si(OC_2H_5)_4$ mit einem theoretischen $SiO_2$-Gehalt von 40 Gew.-% handelt, und mit 26,1 g (175,8 Mol) $(H_2C)_2Si(OC_2H_5)_2$ versetzt. Nach Zusatz von 80 ml Ethanol wurde zunächst noch 30 min. bei 70° C gerührt, dann auf 50° C abgekühlt und ca. weitere 30 min. gerührt, bis die Gelierung einsetzte. 1 min. nach Gelierbeginn wurden dem sich bildenden Gel zunächst 50 ml Wasser und dann 850 ml Toluol zugesetzt. Das 2-Phasensystem wurde auf Rückflußtemperatur aufgeheizt und weitere 3 Stunden bei dieser Temperatur gerührt. Nach dem Abkühlen, Absaugen der flüssigen Phase wurde der in Form von Kugeln vorliegende Feststoff 24 h bei 160° C in 300 ml 2 n Essigsäure gerührt. Anschließend wurde der abfiltrierte Feststoff mit Wasser gewaschen, dann bis auf eine Restfeuchte von ca. 50 Gew.-% getrocknet und in verschiedene Korngrößen fraktioniert. Erhalten wurden 116 g geformtes Produkt, bestehend aus Polymereinheiten der Formel

$$SO_3H\text{-}(CH_2)_3\text{-}SiO_{3/2} \cdot 8\ SiO_{4/2} \cdot (CH_3)_2SiO_{2/2}$$

90 % dieses Produktes lagen mit einer Kugelgröße im Bereich von 0,1 - 2,2 mm vor.

| | |
|---|---|
| Schüttdichte | 360 g/l |
| Porenvolumen | 1,8 ml/g (ausschließlich Meso- und Makroporen keine Mikroporen) |
| Spezifische Oberfläche | 590 $m^2/g$ |
| $H^+$-Kapazität | 0,82 mVal/g |

| Elementaranalyse: | % C | % H | % Si | % S |
|---|---|---|---|---|
| Theorie: | 8,2 | 1,7 | 38,5 | 4,4 |
| Gefunden: | 7,9 | 1,5 | 37,6 | 4,2 |

Beispiel 3

200 ml (140 mMol) einer 0,7 molaren, wäßrigen Lösung einer sulfonierten Organosiliciumverbindung mit der Formel

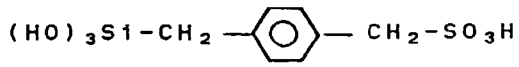

wurden in einem zylindrischen Glasgefäß (HWS-Gefäß) mit Doppelmantel, KPG-Rührer, Rückflußkühler und Tropftrichter mit 370,2 g (1,4 Mol) $Si(OC_3H_7)_4$ und 69,0 g (280 Mol) $Al(OC_4H_9)_3$ vereinigt. Dabei stieg die Temperatur im Reaktor auf 70° C an. Es wurde 10 min. bei dieser Temperatur gerührt und dann auf 35° C abgekühlt und solange weiter gerührt, bis die Gelierung einsetzte. Sofort nach dem Einsetzen der Gelierung wurden dem sich bildenden Gel 1200 ml Xylol zugesetzt. Nach analoger Verfahrensweise wie in Beispiel 1 wurden 135,0 g eines in Form kleiner Kugeln vorliegenden Sulfonatgruppen-haltigen Polysiloxans, bestehend aus Einheiten der Formel

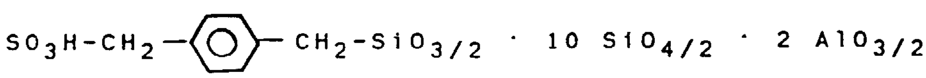

erhalten.

90 % des Produktes lagen in einer Korngröße von 0,05 bis 0,4 mm vor.

| | |
|---|---|
| Schüttdichte | 280 g/l |
| Porenvolumen | 1,9 ml/g |
| Spezifische Oberfläche | 480 $m^2/g$ |
| $H^+$-Kapazität | 0,65 mVal $H^+/g$ |

| Elementaranalyse | % C | % H | % Si | % S | % Al |
|---|---|---|---|---|---|
| Theorie | 9,9 | 0,9 | 31,8 | 3,3 | 2,8 |
| Gefunden | 9,4 | 0,8 | 31,2 | 3,0 | 2,7 |

Beispiel 4

250 ml (225 mmol) einer 0,9 molaren, wäßrigen Lösung der sulfonierten Organosiliciumverbindung mit der Formel $(HO)_3Si(CH_2)_3$-$SO_3H$ wurden analog zu Beispiel 1 mit 281,2 g (1,35 mol) $Si(OC_2H_5)_4$ und 73,9 g (450 mmol) $C_3H_7$-$Si(OCH_3)_3$ umgesetzt. Nach Beendigung einer 2-stündigen Rückflußphase wurde der kugelförmige Feststoff direkt, ohne weitere Temperaturbehandlung mit Wasser und Alkohol säurefrei gewaschen. Nach 24-stündiger Trocknung bei 100° C unter $N_2$-Atmosphäre wurden 162 g eines Sulfonatgruppen-haltigen Polysiloxans, bestehend aus Einheiten der Formel

$$SO_3H\text{-}(CH_2)_3\text{-}SiO_{3/2} \cdot 6\ SiO_{4/2} \cdot 2\ C_3H_7SiO_{3/2}$$

erhalten.

90 % des Produktes lagen in einer Korngröße von 0,2 bis 1,6 mm vor.

| | |
|---|---|
| Schüttdichte | 490 g/l |
| Porenvolumen | 0,9 ml/g |
| Spezifische Oberfläche | 320 $m^2/g$ |
| $H^+$-Kapazität | 0,75 mVal/g |

Die Resultate der Elementaranalysen stimmten mit den theoretisch zu erwartenden Werten überein.

Beispiel 5

100 ml des nach Beispiel 1 hergestellten Sulfonatgruppen-haltigen Polysiloxans, bestehend aus Einheiten der Formel $SO_3H-(CH_2)_3-SiO_{3/2} \cdot 9\ SiO_{4/2}$, mit einer Korngröße von 0,1 - 1,0 mm wurden befeuchtet und in eine Säule mit einem Innendurchmesser von 20 mm überführt. Die Säule wurde mit 3 x 100 ml 0,5 n $CuCl_2$-Lösung binnen jeweils 1 Stunde beschickt, dann mit insgesamt 2 l Wasser salzfrei gewaschen. Nach 24-stündiger Trocknung des behandelten Feststoffs bei 120° C unter $N_2$-Atmosphäre wurde ein Polysiloxan erhalten, das gemäß Elementaranalyse eine Zusammensetzung von

$$Cu[SO_3-(CH_2)_3-SiO_{3/2} \cdot 9\ SiO_{4/2}]_2$$

aufwies.

Beispiel 6

30 ml des in Beispiel 1 hergestellten Sulfonatgruppen-haltigen Polysiloxans, bestehend aus Einheiten der Formel $SO_3H-(CH_2)_3-SiO_{3/2} \cdot 9\ SiO_{4/2}$, mit einer Korngröße von 0,4 - 1,0 mm, wurden in ein von außen beheiztes Metallrohr mit einem Innendurchmesser von 12 mm gefüllt.

Das Säurekatalysatorbett wurde mit 50 g/h Methyl-t-butylether beschickt, die in einer vorgeschalteten Verdampfereinheit verdampft wurden. Die das Katalysatorbett verlassenden Gase wurden in einem nachgeschalteten Gaschromatographen analysiert. Bei einer Reaktionstemperatur von 200° C konnte über die Versuchsdauer von 48 Stunden eine Umsetzung des Methyl-t-butylethers von ca. 99 % erzielt werden. Zu über 95 % wurden dabei die erwarteten Reaktionsprodukte Methanol und Isobuten erhalten.

## Patentansprüche

1. Kugelig geformte Sulfonatgruppen-haltige Organopolysiloxane, bestehend aus Einheiten der allgemeinen Formel

$$(O_{3/2}Si-R^1-SO_3^-)_x M^{x-}$$

in welcher $R^1$ für eine lineare oder verzweigte Alkylengruppe mit 1 bis 12 C-Atomen, eine Cycloalkylengruppe mit 5 bis 8 C-Atomen oder eine Einheit der allgemeinen Formel

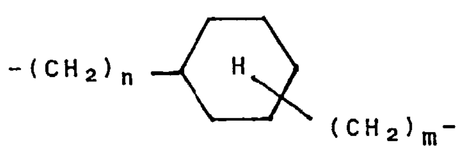

(II)

oder

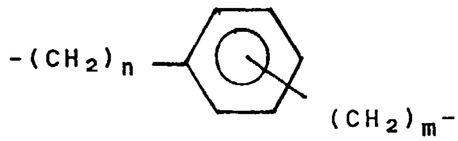

(III)

darstellt, in der n und m eine Zahl von 0 bis 6 ist, x in Abhängigkeit von M eine Zahl von 1 bis 4 bedeutet und M für Wasserstoff oder ein 1- bis 4-wertiges gegebenenfalls komplexes Metallion steht und die Valenzen der siliciumständigen Sauerstoffatome durch Siliciumatome weiterer Gruppen (I) und/oder durch eine oder mehrere Metallatomsauerstoffgruppen der vernetzenden Brückenglieder

$$SiO_{4/2} \text{ oder } R'SiO_{3/2} \text{ oder } R'_2SiO_{2/2} \text{ oder } AlO_{3/2} \text{ oder } R'AlO_{2/2} \qquad (IV)$$

wobei R' eine lineare oder verzweigte Alkylgruppe mit 1 bis 5 C-Atomen oder eine Phenylgruppe ist, abgesättigt sind, wobei das Verhältnis der Siliciumatome in (I) zu der Summe der Silicium- und Aluminiumatome des Vernetzers (IV) 1 : 4 bis 1 : 20 betragen kann,
**gekennzeichnet durch**
makroskopisch kugelförmige Teilchen mit einem Durchmesser von 0,01 bis 3,0 mm, eine spezifische Oberfläche von 0,01 bis 1200 $m^2/g$, ein spezifisches Porenvolumen von 0,01 bis 6,0 ml/g sowie eine Schüttdichte von 50 bis 1000 g/l.

2. Geformte Sulfonatgruppen-haltige Organopolysiloxane gemäß Anspruch 1,
**dadurch gekennzeichnet,**
daß die allgemeine Formel (I) für eine Einheit

$$O_{3/2}Si\text{-}R^1\text{-}SO_3H \qquad (V)$$

steht und $R^1$ dieselbe Bedeutung wie in Anspruch 1 hat.

3. Geformte Sulfonatgruppen-haltige Organopolysiloxane gemäß Anspruch 1 oder 2,
**dadurch gekennzeichnet,**
daß die allgemeine Formel (I) für eine Einheit

$$O_{3/2}Si\text{-}CH_2CH_2CH_2\text{-}SO_3H \qquad (VI)$$

steht.

4. Geformte Sulfonatgruppen-haltige Organopolysiloxane gemäß den Ansprüchen 1 bis 3 mit der Zusammensetzung

$$O_{3/2}Si\text{-}CH_2CH_2CH_2\text{-}SO_3H \cdot a\ SiO_{4/2} \qquad (VII)$$

wobei a eine Zahl von 4 bis 20 ist.

5. Geformte Sulfonatgruppen-haltige Organopolysiloxane gemäß den Ansprüchen 1 bis 3 mit der Zusammensetzung

$$O_{3/2}Si\text{-}CH_2CH_2CH_2\text{-}SO_3H \cdot a\ SiO_{4/2} \cdot b\ R'SiO_{3/2} \qquad (VIII)$$

wobei a wie b gleich oder größer 1 und die Summe von a und b eine Zahl von 4 bis 20 ist und R' dieselbe Bedeutung wie in Anspruch 1 hat.

**6.** Geformte Sulfonatgruppen-haltige Organopolysiloxane gemäß den Ansprüchen 1 bis 3 mit der Zusammensetzung

$$O_{3/2}Si\text{-}CH_2CH_2CH_2\text{-}SO_3H \cdot a\ SiO_{4/2} \cdot c\ R'_2SiO_{2/2} \quad \text{(IX)}$$

wobei a wie c gleich oder größer 1 und die Summe von a und c eine Zahl von 4 bis 20 ist und R' dieselbe Bedeutung wie in Anspruch 1 hat.

**7.** Geformte Sulfonatgruppen-haltige Organopolysiloxane gemäß den Ansprüchen 1 bis 3 mit der Zusammensetzung

$$O_{3/2}Si\text{-}CH_2CH_2CH_2\text{-}SO_3H \cdot a\ SiO_{4/2} \cdot d\ AlO_{3/2} \quad \text{(X)}$$

wobei a wie d gleich oder größer 1 und die Summe von a und d eine Zahl von 4 bis 20 ist.

**8.** Geformte Sulfonatgruppen-haltige Organopolysiloxane gemäß den Ansprüchen 1 bis 3 mit der Zusammensetzung

$$O_{3/2}Si\text{-}CH_2CH_2CH_2\text{-}SO_3H \cdot a\ SiO_{4/2} \cdot c\ R'_2SiO_{2/2} \cdot d\ AlO_{3/2} \quad \text{(XI)}$$

wobei a, c, d gleich oder größer 1 und die Summe von a, c und d elne Zahl von 4 bis 20 ist.

**9.** Verfahren zur Herstellung von geformten Sulfonatgruppen-haltigen Organopolysiloxanen gemäß den Ansprüchen 1 bis 8,
**dadurch gekennzeichnet,**
daß man eine wäßrige Lösung einer sulfonierten Organosiliciumverbindung der Formel

$$(HO)_3Si\text{-}R^1\text{-}SO_3H \quad \text{(XII)}$$

bzw. über Sauerstoffbrücken kondensierter Siloxanderivate davon, wobei $R^1$ eine lineare oder verzweigte Alkylengruppe mit 1 bis 12 C-Atomen, eine Cycloalkylengruppe mit 5 bis 8 C-Atomen oder eine Einheit der allgemeinen Formel

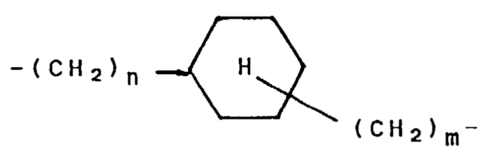

(II)

oder

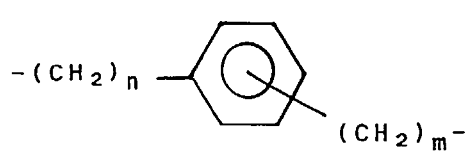

(III)

darstellt, in der n und m eine Zahl von 0 bis 6 ist, entsprechend der gewünschten stöchiometrischen Zusammensetzung des herzustellenden Organopolysiloxans, mit einer oder mehreren Vernetzerkomponenten

$$Si(OR)_{2-4}R'_{0-2} \text{ bzw. } Al(OR)_{2-3}R'_{0-1} \quad (XIII)$$

bzw. über Sauerstoffbrücken kondensierter Derivate, wobei R' eine lineare oder verzweigte Alkylgruppe mit 1 bis 5 C-Atomen oder eine Phenylgruppe ist, unterhalb oder bei Raumtemperatur bis 100° C, ohne oder unter Verwendung eines weitgehend wassermischbaren Lösungsmittels unter Rühren umsetzt, das Reaktionsgemisch unterhalb oder bei Raumtemperatur bis 100° C gelieren läßt, das sich bildende Gel gegebenenfalls bei Gelierungsbeginn oder bis zu einer Stunde danach mit 5 bis 1000 Gew.-% bezogen auf die Gesamtmenge von wäßriger Lösung an sulfonierter Organosiliciumverbindung (XII) und Vernetzerkomponente (XIII) eines weitgehend wassermischbaren Lösungsmlttels oder Wasser versetzt und homogenisiert,
dem viskosen Homogenisat sofort oder im Zeitraum bis zu 2 Stunden, gegebenenfalls unter Erhöhung der ursprünglich eingestellten Temperatur, 20 bis 2000 Gew.-% bezogen auf die Gesamtmenge von wäßriger Lösung an sulfonierter Organosiliciumverbindung (XII) und Vernetzerkomponente (XIII), eines weitgehend wasserunlöslichen Lösungsmittels zusetzt, die Siloxan-enthaltende wäßrige Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 200° C, gegebenenfalls unter Schutzgas oder im Vakuum trocknet und 1 bis 100 Stunden bei Temperaturen von 150 bis 230° C tempert und/oder in Korngrößen klassifiziert.

**10.** Verfahren gemäß Anspruch 9,
**dadurch gekennzeichnet,**
daß die wäßrige Lösung der sulfonierten Organosiliciumverbindung der Formel (XII) einen $H^+$-Gehalt von 0,1 bis 2,5 Mol/l aufweist.

**11.** Verfahren gemäß Anspruch 9 oder 10,
**dadurch gekennzeichnet,**
daß das gegebenenfalls vor der Gelierung zugesetzte wassermischbare Lösungsmittel ein linearer oder verzweigter Alkohol mit 1 bis 5 C-Atomen ist.

**12.** Verfahren gemäß den Ansprüchen 9 bis 11,
**dadurch gekennzeichnet,**
daß man die Gelierung bei Raumtemperatur bis 80° C bei Normaldruck oder einem Überdruck, welcher der Summe der Partialdrucke der Komponenten bei der jeweils angewandten Temperatur entspricht, durchführt.

**13.** Verfahren gemäß den Ansprüchen 9 bis 12,
**dadurch gekennzeichnet,**
daß das sich bildende Gel bei Gelierungsbeginn oder bis zu einer Stunde danach mit 5 bis 300 Gew.-%, vorzugsweise 5 bis 50 Gew.-%, bezogen auf die Gesamtmenge von wäßriger Lösung an sulfonierter Organosiliciumverbindung (XII) und Vernetzerkomponente (XIII), eines linearen oder verzweigten Alkohols mit 1 bis 5 C-Atomen oder Wasser versetzt wird.

**14.** Verfahren gemäß den Ansprüchen 9 bis 13,
**dadurch gekennzeichnet,**
daß es sich bei dem weitgehend wasserunlöslichen Lösungsmittel, in dem die Siloxan-enthaltende wäßrige Phase dispergiert wird, um Toluol, o-, m-, p-Xylol, einen cyclischen oder offenkettigen Kohlenwasserstoff mit 5 bis 8 C-Atomen oder um ein entsprechendes Gemisch daraus handelt.

**15.** Verfahren zur Nachbehandlung der nach den Ansprüchen 9 bis 14 erhaltenen, aber nicht getrockneten geformten Sulfonatgruppen-haltigen Organopolysiloxane,
**dadurch gekennzeichnet,**
daß der in Form von Kugeln ausgebildete Feststoff in Anwesenheit mindestens der Komponente Wasser in der flüssigen Phase einer Temperaturbehandlung während 1 Stunde bis zu einer Woche bei 50 bis 300° C unterzogen wird, wobei bedarfsweise Überdruck angewendet wird.

**16.** Verfahren gemäß Anspruch 15,
**dadurch gekennzeichnet,**
daß die Nachbehandlung in Gegenwart einer anorganischen oder organischen Säure, vorzugsweise in Gegenwart

von Salzsäure, oder in Gegenwart einer als Kondensationskatalysator wirkenden Metallkomponente durchgeführt wird.

17. Verfahren zur Herstellung der erfindungsgemäßen geformten Sulfonatgruppen-haltigen Organopolysiloxane gemäß Anspruch 1, bei denen $M^{x+}$ für ein 1- bis 4-wertiges, gegebenenfalls komple-xes Metallion steht,
**dadurch gekennzeichnet,**
daß man ein gemäß Ansprüchen 9 bis 16 hergestelltes Sulfonatgruppen-haltiges Organopolysiloxan, bei dem $M^{x+}$ gleich $H^+$ ist, entweder unmittelbar nach seiner Herstellung oder erst nach Trocknung und Temperung in Wasser oder einem organischen Lösungsmittel mit einem anorganischen oder organischen Reagenz, welches in ein gegebenenfalls komplexes Kation und ein Anlon dissoziieren kann, nach dem statischen oder dynamischen Ionenaustauschprinzip unter Austausch von $H^+$ gegen $M^{x+}$ umsetzt, anschließend wäscht und dann gegebenenfalls von der flüssigen Phase abtrennt, gegebenenfalls trocknet oder direkt der weiteren Verwendung zuführt.

18. Verwendung der geformten Sulfonatgruppen-haltigen Organopolysiloxane gemäß den Ansprüchen 1 bis 8 mit $M^{x+}$ gleich $H^+$ als feste Säurekatalysatoren zur Durchführung chemischer Umsetzungen.

## Claims

1. Spherically shaped organopolysiloxanes containing sulphonate groups and consisting of units corresponding to the general formula:

$$(O_{3/2}Si\text{-}R^1\text{-}SO_3^-)_x M^{x+} \qquad \text{(I)}$$

wherein $R^1$ represents a linear or branched alkylene group having 1 to 12 C atoms, a cycloalkylene group having 5 to 8 C atoms or a unit corresponding to the general formula

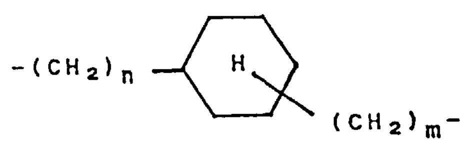

(II)

or

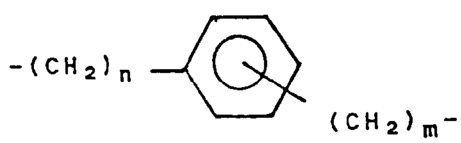

(III)

wherein n and m are numbers from 0 to 6, x denotes a number from 1 to 4 depending on M, and M represents hydrogen or a monovalent to tetravalent, optionally complex metal ion and the valencies of the oxygen atoms bonded to silicon are saturated by silicon atoms of other groups (I) and/or by one or more metal atom-oxygen groups of the cross-linking bridges

$$SiO_{4/2} \text{ or } R'SiO_{3/2} \text{ or } R'_2SiO_{2/2} \text{ or } AlO_{3/2} \text{ or } R'AlO_{2/2} \qquad \text{(IV)}$$

wherein R' is a linear or branched alkyl group having 1 to 5 C atoms or a phenyl group,

and the ratio of the silicon atoms in (I) to the sum of the silicon atoms and aluminium atoms of the cross-linking group (IV) can be from 1:4 to 1:20,

characterised by macroscopically spherical particles having a diameter of from 0.01 to 3.0 mm, a specific surface of from 0.01 to 1200 $m^2/g$, a specific pore volume of from 0.01 to 6.0 ml/g and a bulk density of from 50 to 1000 g/l.

**2.** Shaped organopolysiloxanes containing sulphonate groups according to claim 1, characterised in that the general formula (I) represents a unit

$$O_{3/2}Si\text{-}R^1\text{-}SO_3H \quad (V)$$

and $R^1$ has the same meaning as in claim 1.

**3.** Shaped organopolysiloxanes containing sulphonate groups according to claim 1 or 2, characterised in that the general formula (I) represents a unit

$$O_{3/2}Si\text{-}CH_2CH_2CH_2\text{-}SO_3H \quad (VI).$$

**4.** Shaped organopolysiloxanes containing sulphonate groups according to claims 1 to 3, having the composition

$$O_{3/2}Si\text{-}CH_2CH_2CH_2\text{-}SO_3H \cdot a\ SiO_{4/2} \quad (VII)$$

wherein a is a number from 4 to 20.

**5.** Shaped organopolysiloxanes containing sulphonate groups according to claims 1 to 3, having the composition

$$O_{3/2}Si\text{-}CH_2CH_2CH_2\text{-}SO_3H \cdot a\ SiO_{4/2} \cdot b\ R'SiO_{3/2} \quad (VIII)$$

wherein a and b are equal to or greater than 1 and the sum of a and b is a number from 4 to 20 and R' has the same meaning as in claim 1.

**6.** Shaped organopolysiloxanes containing sulphonate groups according to claims 1 to 3, having the composition

$$O_{3/2}Si\text{-}CH_2CH_2CH_2\text{-}SO_3H \cdot a\ SiO_{4/2} \cdot c\ R_2'SiO_{2/2} \quad (IX)$$

wherein a and c are equal to or greater than 1 and the sum of a and c is a number from 4 to 20 and R' has the same meaning as in claim 1.

**7.** Shaped organopolysiloxanes containing sulphonate groups according to claims 1 to 3, having the composition

$$O_{3/2}Si\text{-}CH_2CH_2CH_2\text{-}SO_3H \cdot a\ SiO_{4/2} \cdot d\ AlO_{3/2} \quad (X)$$

wherein a and d are equal to or greater than 1 and the sum of a and d is a number from 4 to 20.

**8.** Shaped organopolysiloxanes containing sulphonate groups according to claims 1 to 3, having the composition

$$O_{3/2}Si\text{-}CH_2CH_2CH_2\text{-}SO_3H \cdot a\ SiO_{4/2} \cdot c\ R_2'SiO_{2/2} \cdot d\ AlO_{3/2} \quad (XI)$$

wherein a, c and d are equal to or greater than 1 and the sum of a, c and d is a number from 4 to 20.

**9.** A process for the preparation of shaped organopolysiloxanes containing sulphonate groups according to claims 1 to 8,
characterised in that an aqueous solution of a sulphonated organosilicon compound corresponding to the formula

$$(HO)_3Si\text{-}R^1\text{-}SO_3H \qquad (XII)$$

or siloxane derivatives thereof condensed via oxygen bridges, wherein $R^1$ represents a linear or branched alkylene group having 1 to 12 C atoms, a cycloalkylene group having 5 to 8 C atoms or a unit corresponding to the general formula

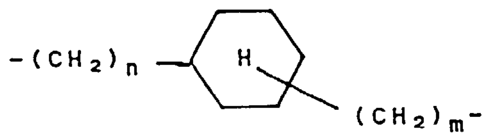

(II)

or

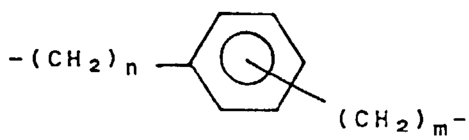

(III)

wherein n and m are numbers from 0 to 6, according to the desired stoichiometric composition of the organopolysiloxane to be prepared,
is/are reacted with one or more cross-linking components

$$Si(OR)_{2\text{-}4}R'_{0\text{-}2} \text{ or } Al(OR)_{2\text{-}3}R'_{0\text{-}1} \qquad (XIII)$$

or derivatives condensed via oxygen bridges, wherein R' is a linear or branched alkyl group having 1 to 5 C atoms or a phenyl group,
with stirring below or at room temperature up to 100°C, with or without the use of a largely water-miscible solvent, the reaction mixture is allowed to gel below or at room temperature up to 100°C,
5 to 1000 wt.%, referred to the total quantity in the aqueous solution of sulphonated organosilicon compound (XII) and cross-linking component (XIII), of a largely water-miscible solvent or water is added to the gel being formed, optionally at the beginning of gelation or up to one hour thereafter, and homogenised,
20 to 2000 wt.%, referred to the total quantity in the aqueous solution of sulphonated organosilicon compound (XII) and cross-linking component (XIII), of a solvent largely immiscible in water is added to the viscous homogenisate, immediately or within a period of up to 2 hours, optionally with an increase in the originally adjusted temperature, the siloxane-containing aqueous phase is dispersed in the liquid two-phase system and the solid material forming as spheres, after an adequate reaction time for this, is separated from the liquid phase at room temperature up to 200°C and is then optionally extracted, dried at room temperature up to 200°C, optionally under protective gas or in a vacuum, and tempered for 1 to 100 hours at temperatures of from 150 to 230°C and/or graded into particle sizes.

**10.** A process according to claim 9,
characterised in that the aqueous solution of the sulphonated organosilicon compound corresponding to formula (XII) has an $H^+$ content of from 0.1 to 2.5 mol/l.

**11.** A process according to claim 9 or 10,
characterised in that the water-miscible solvent optionally added prior to the gelation is a linear or branched alcohol having 1 to 5 C atoms.

**12.** A process according to claims 9 to 11,
characterised in that the gelation is carried out at room temperature up to 80°C at normal pressure or at an excess pressure which corresponds to the sum of the partial pressures of the components at the temperature applied in each case.

**13.** A process according to claims 9 to 12,
characterised in that
5 to 300 wt.%, preferably 5 to 50 wt.%, referred to the total quantity in the aqueous solution of sulphonated organosilicon compound (XII) and cross-linking component (XIII), of a linear or branched alcohol having 1 to 5 C atoms, or water, is added to the gel being formed, at the beginning of gelation or up to one hour thereafter.

**14.** A process according to claims 9 to 13,
characterised in that the solvent largely insoluble in water, in which the siloxane-containing aqueous phase is dispersed, is toluene, o-, m-, p-xylene, a cyclic or open-chain hydrocarbon having 5 to 8 C atoms or a corresponding mixture thereof.

**15.** A process for the aftertreatment of the shaped organopolysiloxanes containing sulphonate groups obtained according to claims 9 to 14 but not dried, characterised in that the solid material formed as spheres is subjected to a heat treatment for a period of one hour up to one week at 50°C to 300°C, in the presence of at least the component water in the liquid phase, excess pressure being applied as required.

**16.** A process according to claim 15,
characterised in that the aftertreatment is carried out in the presence of an inorganic or organic acid, preferably in the presence of hydrochloric acid, or in the presence of a metal component acting as a condensation catalyst.

**17.** A process for the preparation of the shaped organopolysiloxanes containing sulphonate groups according to the invention as in claim 1, wherein $M^{x+}$ represents a monovalent to tetravalent, optionally complex metal ion,
characterised in that either immediately after its preparation or not until after drying and tempering, an organopolysiloxane containing sulphonate groups prepared according to claims 9 to 16, wherein $M^{x+}$ is $H^+$, is reacted in water or in an organic solvent with an inorganic or organic reagent capable of dissociating into an optionally complex cation and an anion, on the principle of static or dynamic ion exchange, with the exchange of $H^+$ for $M^{x+}$, and is subsequently washed and then optionally separated from the liquid phase, optionally dried or directly removed for further use.

**18.** The use of the shaped organopolysiloxanes containing sulphonate groups according to claims 1 to 8, wherein $M^{x+}$ is $H^+$, as solid acid catalysts for carrying out chemical reactions.

## Revendications

**1.** Organopolysiloxanes façonnés sphériques contenant des groupes sulfonate, constitués par des unités de formule générale

$$(O_{3/2}Si\text{-}R^1\text{-}SO_3^-)_xM^{x+} \qquad (I)$$

dans laquelle $R^1$ est un groupe alkylène linéaire ou ramifié comportant 1 à 12 atomes de carbone, un groupe cycloalkylène comportant 5 à 8 atomes de carbone ou une unité de formule générale

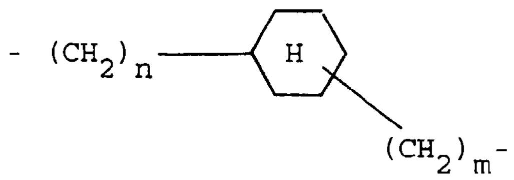

(II)

ou

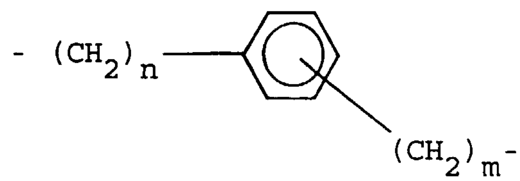

(III)

dans lesquelles n et m sont un chiffre compris entre 0 et 6, x est un chiffre de 1 à 4 dépendant de M et M représente de l'hydrogène ou un ion métallique monovalent à quadrivalent, le cas échéant complexe, et les valences des atomes d'oxygène sur le silicium sont saturées par d'autres groupes (I) et/ou par un ou plusieurs groupes oxygénés de l'atome métallique des éléments de pont de réticulation

$$SiO_{4/2} \text{ ou } R'SiO_{3/2} \text{ ou } R'_2SiO_{2/2} \text{ ou } AlO_{3/2} \text{ ou } R'AlO_{2/2} \qquad (IV)$$

dans lesquels R' est un groupe alkyle linéaire ou ramifié comportant 1 à 5 atomes de carbone ou un groupe phényle, le rapport entre les atomes de silicium dans (I) et la somme des atomes de silicium et d'aluminium de l'agent de réticulation (IV) pouvant être compris entre 1:4 et 1:20, caractérisés par des particules sphériques macroscopiques présentant un diamètre de 0,01 à 3,0 mm, une surface spécifique de 0,01 à 1200 $m^2/g$, un volume de pores spécifique de 0,01 à 6,0 ml/g et une densité apparente de 50 à 1000 g/l.

**2.** Organopolysiloxanes façonnés contenant des groupes sulfonate selon la revendication 1, caractérisés en ce que la formule générale (I) représente l'unité

$$O_{3/2}Si\text{-}R^1\text{-}SO_3H \qquad (V)$$

et en ce que $R^1$ a la même signification que dans la revendication 1.

**3.** Organopolysiloxanes façonnés contenant des groupes sulfonate selon la revendication 1 ou 2, caractérisés en ce que la formule générale (I) représente l'unité

$$O_{3/2}Si\text{-}CH_2CH_2CH_2\text{-}SO_3H \qquad (VI).$$

**4.** Organopolysiloxanes façonnés contenant des groupes sulfonate selon les revendications 1 à 3, présentant la composition

$$O_{3/2}Si\text{-}CH_2CH_2CH_2\text{-}SO_3H.\ a\ SiO_{4/2} \qquad (VII)$$

dans laquelle a est un nombre compris entre 4 et 20.

**5.** Organopolysiloxanes façonnés contenant des groupes sulfonate selon les revendications 1 à 3, présentant la composition

$$O_{3/2}Si\text{-}CH_2CH_2CH_2\text{-}SO_3H.\ a\ SiO_{4/2}.b\ R'_2SiO_{3/2} \qquad (VIII)$$

dans laquelle a et b sont égaux ou supérieurs à 1 et la somme de a et b est un nombre de 4 à 20 et R' a la même signification que dans la revendication 1.

**6.** Organopolysiloxanes façonnés contenant des groupes sulfonate selon les revendications 1 à 3, présentant la composition

$$O_{3/2}Si\text{-}CH_2CH_2CH_2\text{-}SO_3H.\ a\ SiO_{4/2}.c\ R'_2SiO_{2/2} \qquad (IX)$$

dans laquelle a et c sont égaux ou supérieurs à 1 et la somme de a et c est un nombre de 4 à 20 et R' a la même signification que dans la revendication 1.

**7.** Organopolysiloxanes façonnés contenant des groupes sulfonate selon les revendications 1 à 3, présentant la composition

$$O_{3/2}Si\text{-}CH_2CH_2CH_2\text{-}SO_3H.\ a\ SiO_{4/2}.d\ AlO_{3/2} \qquad (X)$$

dans laquelle a et d sont égaux ou supérieurs à 1 et la somme de a et d est un nombre de 4 à 20.

**8.** Organopolysiloxanes façonnés contenant des groupes sulfonate selon les revendications 1 à 3, présentant la composition

$$O_{3/2}Si\text{-}CH_2CH_2CH_2\text{-}SO_3H.\ a\ SiO_{4/2}.c\ R'_2SiO_{2/2}.\ d\ AlO_{3/2} \qquad (XI)$$

dans laquelle a, c et d sont égaux ou supérieurs à 1 et la somme de a, c et d est un nombre de 4 à 20.

**9.** Procédé pour la fabrication d'organopolysiloxanes façonnés contenant des groupes sulfonate selon les revendications 1 à 8, caractérisé en ce qu'on fait réagir sous agitation une solution aqueuse d'un composé organosilicique sulfoné de formule

$$(HO)_3Si\text{-}R^1\text{-}SO_3H \qquad (XII)$$

ou de dérivés de siloxane condensés via des ponts d'oxygène, $R^1$ étant un groupe alkylène linéaire ou ramifié comportant 1 à 12 atomes de carbone, un groupe cycloalkylène comportant 5 à 8 atomes de carbone ou une unité de formule générale

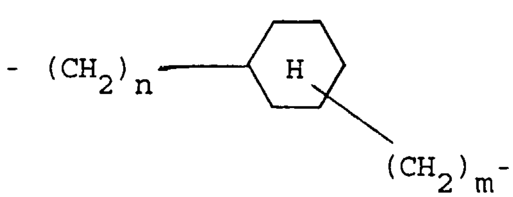

(II)

ou

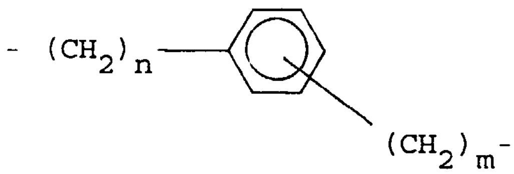

(III)

dans lesquelles n et m sont un chiffre de 0 à 6, selon la composition stoechiométrique désirée de l'organopolysiloxane à fabriquer, avec un ou plusieurs composants de réticulation

$$Si(OR)_{2-4}R'_{0-2} \text{ ou } Al(OR)_{2-3}R'_{0-1} \quad \text{(XIII)}$$

ou des dérivés condensés via des ponts oxygène, R' étant un groupe alkyle linéaire ou ramifié comportant 1 à 5 atomes de carbone ou un groupe phényle, au-dessous de ou à la température ambiante jusqu'à 100 °C, sans ou en utilisant un solvant largement miscible à l'eau, en ce qu'on laisse gélifier le mélange réactionnel au-dessous de ou à la température ambiante jusqu'à 100 °C, en ce qu'on ajoute au gel qui se forme, le cas échéant au début de la gélification ou jusqu'à une heure après ce début, 5 à 1000 % en poids, par rapport à la quantité totale de la solution aqueuse du composé organosilicique sulfoné (XII) et du composant de réticulation (XIII), d'un solvant largement miscible à l'eau ou d'eau, en ce qu'on homogénéise, en ce qu'on ajoute au produit homogénéisé visqueux, immédiatement ou après un laps de temps pouvant aller jusqu'à 2 heures, le cas échéant en augmentant la température réglée au départ, 20 à 2000 % en poids, par rapport à la quantité totale de solution aqueuse du composé organosilicique (XII) et du composé de réticulation (XIII), d'un solvant largement insoluble dans l'eau, en ce qu'on disperse la phase aqueuse contenant le siloxane dans le système liquide à deux phases et en ce qu'on sépare le solide se formant sous forme de billes, après un temps de réaction suffisant entre la température ambiante et 200 °C, de la phase liquide, puis en ce qu'on extrait le cas échéant, en ce qu'on sèche entre la température ambiante et 200 °C, le cas échéant sous un gaz protecteur ou sous vide, et en ce qu'on traite thermique; ment à des températures comprises entre 150 et 230 °C pendant 1 à 100 heures et/ou en ce qu'on classe en fractions granulométriques.

**10.** Procédé selon la revendication 9, caractérisé en ce que la solution aqueuse du composé organosilicique sulfoné de formule (XII) présente une teneur en $H^+$ comprise entre 0,1 et 2,5 moles/l.

**11.** Procédé selon la revendication 9 ou 10, caractérisé en ce que le solvant miscible à l'eau ajouté, le cas échéant, avant la gélification est un alcool linéaire ou ramifié comportant 1 à 5 atomes de carbone.

**12.** Procédé selon les revendications 9 à 11, caractérisé en ce qu'on réalise la gélification entre la température ambiante et 80 °C, sous pression normale ou sous surpression qui correspond à la somme des pressions partielles des composants à la température utilisée.

**13.** Procédé selon les revendications 9 à 12, caractérisé en ce qu'on ajoute au gel qui se forme au début de la gélification ou jusqu'à une heure après ce début, 5 à 300 % en poids, de préférence 5 à 50 % en poids, par rapport à la quantité totale de solution aqueuse du composé organosilicique sulfoné (XII) et du composant de réticulation (XIII), d'un alcool linéaire ou ramifié comportant 1 à 5 atomes de carbone ou de l'eau.

**14.** Procédé selon les revendications 9 à 13, caractérisé en ce qu'en ce qui concerne le solvant largement insoluble dans l'eau, dans lequel on disperse la phase aqueuse contenant le siloxane, il s'agit de toluène, d'oxylène de m-xylène ou du p-xylène, d'un hydrocarbure cyclique ou à chaîne ouverte comportant 5 à 8 atomes de carbone ou d'un mélange correspondant de ces composés.

**15.** Procédé pour le traitement ultérieur de l'organopolysiloxane façonné contenant des groupes sulfonate obtenu selon les revendications 9 à 14, mais non séché, caractérisé en ce que le solide obtenu sous forme de billes est soumis, en présence d'au moins le composant eau, dans la phase liquide, à un traitement thermique entre 50 et 300 °C pendant 1 heure à une semaine, une surpression étant utilisée en fonction des besoins.

**16.** Procédé selon la revendication 15, caractérisé en ce que le traitement ultérieur est réalisé en présence d'un acide organique ou inorganique, de préférence en présence d'acide chlorhydrique, ou en présence de composants métalliques agissant comme catalyseur de condensation.

**17.** Procédé pour la fabrication de l'organopolysiloxane façonné contenant des groupes sulfonate selon l'invention selon la revendication 1, dans lequel $M^{x+}$ représente un complexe monovalent à quadrivalent, le cas échéant complexe, caractérisé en ce qu'on fait réagir un organopolysiloxane contenant des groupes sulfonate fabriqué selon les revendications 9 à 16, dans lequel $M^{x+}$ est égal à $H^+$, soit directement après sa fabrication soit après séchage et traitement thermique, dans de l'eau ou dans un solvant organique avec un réactif inorganique ou organique, qui peut le cas échéant être dissocié en un cation complexe et un anion, selon le principe d'échange d'ions statique ou dynamique par échange de $H^+$ par $M^{x+}$, en ce qu'on le lave consécutivement et en ce qu'on le sépare, le cas échéant, de la phase liquide, en ce qu'on le sèche le cas échéant ou en ce qu'on le traite directement.

**18.** Utilisation des organopolysiloxanes façonnés contenant des groupes sulfonate selon les revendications 1 à 8 avec $M^{x+}$ égal à $H^+$ comme catalyseurs acides solides pour la réalisation de réactions chimiques.